# EUROPÄISCHE PATENTSCHRIFT

(11) **EP 2 103 272 B1**
(45) Veröffentlichungstag und Bekanntmachung des Hinweises auf die Patenterteilung: **14.06.2017**
(21) Anmeldenummer: 08004046.2
(22) Anmeldetag: 05.03.2008
(51) Int. Cl.: A61C 1/00, B67D 3/00

(54) **Medizinische, insbesondere dentalmedizinische, Behandlungseinrichtung mit einem Flüssigkeitsbehälter**
Medical, particularly dental treatment device with a fluid container
Dispositif de traitement médical, en particulier dentaire, doté d'un récipient de liquide

(43) Veröffentlichungstag der Anmeldung: 23.09.2009
(73) Patentinhaber: W & H Dentalwerk Bürmoos GmbH, 5111 Bürmoos (AT)
(72) Erfinder: Brandstätter, Andreas, 5120 St. Pantaleon (AT); Schuh, Walter, 5111 Bürmoos (AT); Wendtner, Wolfgang, 5112 Lamprechtshausen (AT); Tannebaum, Wolfgang, 5110 Oberndorf (AT)
(74) Vertreter: Benda, Ralf

(56) Entgegenhaltungen:
- EP-A- 1 243 224
- US-A- 5 577 638
- US-B2- 7 131 838

## Beschreibung

Die vorliegende Erfindung betrifft einen Flüssigkeitsbehälter für eine medizinische oder chirurgische, insbesondere dentalmedizinische oder dentalchirurgische, Behandlungseinrichtung gemäß dem Oberbegriff des Anspruchs 1 sowie eine Behandlungseinrichtung mit einem derartigen Flüssigkeitsbehälter.

Bei unterschiedlichen medizinischen, chirurgischen, dentalen oder dentalchirurgischen Eingriffen und Behandlungen ist es notwendig, die Behandlungsstelle und deren Umgebung zum Beispiel zum Kühlen oder zum Wegspülen von abgetragenem Gewebe oder Körperflüssigkeiten mit Flüssigkeit zu versorgen. Dazu sind Behandlungseinrichtungen mit Anschlüssen für Flüssigkeitsbehälter vorgesehen, so dass die in den Behältern enthaltene Flüssigkeit über Flüssigkeitsleitungen zur Behandlungsstelle förderbar ist.

Eine derartige Behandlungseinrichtung mit einem dazu gehörigen Flüssigkeitsbehälter ist aus der Patentschrift US 7,131,838 B2, worauf die zweiteilige Form des Anspruchs 1 basiert, bekannt. Der in diesem Dokument offenbarte Flüssigkeitsbehälter weist ein Ventil auf, das zwei Leitungen für die Flüssigkeit und für Luft, zum Ausgleichen des während des Absaugens der Flüssigkeit aus dem Behälter entstehenden Unterdrucks, öffnet oder schließt. Ein zweites, den Luftdurchfluss steuerndes Ventil ist in der Behandlungseinrichtung vorgesehen. Der Nachteil dieser Behandlungseinrichtung ist, dass der Behälter nur mit Behandlungseinrichtungen verwendet werden kann, die ein den Luftdurchfluss steuerndes Ventil aufweisen.

Um diesen Nachteil zu lösen, sind Flüssigkeitsbehälter vorgeschlagen worden, bei denen beide Ventil für die Flüssigkeitsförderung und für die Luftförderung am Behälter vorgesehen sind, siehe zum Beispiel die Patentschrift US 5,577,638. In einem Ausführungsbeispiel dieser Patentschrift sind die beiden Ventil zentrisch ineinander angeordnet, so dass sie auch in einem schmalen Behälterdeckel Platz finden.

Der Nachteil der in der Patentschrift US 5,577,638 offenbarten Behälter und Behandlungseinrichtungen liegt darin, dass, wie auch in der vorher genannten Patentschrift US 7,131,838 B2, die Luftzufuhr durch die Behandlungseinrichtungen erfolgt, so dass in den Behandlungseinrichtungen Luftleitungen und gegebenenfalls weitere Bauteile, wie Ventile, Filter etc. vorzusehen sind. Damit verkompliziert sich der Aufbau der Behandlungseinrichtungen und es können die Behälter nur mit Behandlungseinrichtungen verwendet werden, die mit Luftleitungen ausgestattet sind.

Der vorliegenden Erfindung liegt daher die Aufgabe zugrunde einen Flüssigkeitsbehälter für eine Behandlungseinrichtung bzw. eine Behandlungseinrichtung mit einem Flüssigkeitsbehälter zu schaffen, die die oben genannten Nachteile nicht aufweisen und die insbesondere eine vereinfachte Luftzufuhr in den Behälter aufweisen.

Zur Lösung dieser Aufgabe ist ein Flüssigkeitsbehälter vorgesehen, der zur Abgabe von Behandlungsflüssigkeit an eine Behandlungsstelle über eine medizinische, insbesondere dentalmedizinische, Behandlungseinrichtung geeignet ist, wobei die Behandlungseinrichtung eine Anschlussvorrichtung für den Flüssigkeitsbehälter aufweist. Am Flüssigkeitsbehälter ist eine Ventilvorrichtung zum Durchtritt von Flüssigkeit aus dem Flüssigkeitsbehälter in die Behandlungseinrichtung und zum Durchtritt eines gasförmigen Mediums in den Flüssigkeitsbehälter angeordnet, wobei die Ventilvorrichtung aus einem Ventilgehäuse mit einem ersten, das Ventilgehäuse durchsetzenden Strömungsweg, einem beweglich in dem ersten Strömungsweg aufgenommenen ersten Ventilkörper, einem zweiten, im ersten Ventilkörper vorgesehene Strömungsweg, und einem beweglich in dem zweiten Strömungsweg aufgenommenen zweiten Ventilkörper besteht. Das Ventilgehäuse umfasst ein erstes, dem Flüssigkeitsbehälter zugewandtes Ende, ein zweites vom Flüssigkeitsbehälter abgewandtes Ende und einen sich zwischen den beiden Enden erstreckenden Mantel, der von einer Querbohrung durchsetzt ist, die mit einem der beiden Strömungswege verbindbar oder verbunden ist.

Das Vorstehen der Querbohrung im Mantel des Ventilgehäuses ermöglicht eine Verbindung des Luft führenden Strömungswegs der Ventilvorrichtung über die Querbohrung in die Umgebung, ohne dass der Luft führende Strömungsweg durch die Behandlungseinrichtung zu führen ist. Die Verbindung mit der Umgebung erfolgt bevorzugt durch einen Spalt, der, wenn der Flüssigkeitsbehälter an die Behandlungseinrichtung angeschlossen ist, zwischen der Ventilvorrichtung und / oder dem Flüssigkeitsbehälter und der Behandlungseinrichtung frei bleibt. Die Querbohrung ist somit direkt oder indirekt, zum Beispiel mittels eines Medienkanals, der anschließend an die Querbohrung verläuft, bevorzugt entlang der Außenseite des Ventilgehäuses, mit der Umgebung, d.h. mit dem Spalt, verbunden. Die in den Flüssigkeitsbehälter strömende Luft fließt somit von diesem Spalt als Teil der Umgebung, gegebenenfalls durch den Medienkanal, die Querbohrung und den Strömungsweg innerhalb der Ventilvorrichtung in den Flüssigkeitsbehälter.

Um das Vorhandensein des Spalt zwischen der Ventilvorrichtung und / oder dem Flüssigkeitsbehälter und der Behandlungseinrichtung oder eines ausreichend großen Spalts sicher zu stellen, ist in einem bevorzugten Ausführungsbeispiel zumindest ein Abstandhalter an der Ventilvorrichtung und / oder am Flüssigkeitsbehälter und / oder an der Behandlungseinrichtung vorgesehen. Alternativ ist die Aufnahme der Anschlussvorrichtung der Behandlungseinrichtung kürzer als der Abschnitt des Flüssigkeitsbehälters oder der Ventilvorrichtung, der in diese Aufnahme eingefügt wird, so dass der Flüssigkeitsbehälter oder die Ventilvorrichtung die Aufnahme überragen und dazwischen der Spalt gebildet ist.

Bei der medizinischen oder chirurgischen, insbesondere dentalmedizinischen oder dentalchirurgischen, Behandlungseinrichtung handelt es sich bevorzugt um eine Zahnsteinentfernungseinrichtung oder eine Einheit zum Setzten von Implantaten. Derartige Behandlungseinrichtungen sind seit langem bekannt, so dass sie nicht im Detail beschrieben werden. Die Behandlungseinrichtungen weisen neben der Anschlussvorrichtung für den Flüssigkeitsbehälter meist eine Energieversorgung, zum Beispiel einen Anschluss an ein Stromnetz oder einen oder mehrere Akkumulatoren, einen oder mehrere Anschlüsse an Behandlungsmedien, einen oder mehrere Anschlüsse für Behandlungsinstrumente, zum Beispiel für Zahnsteinentfernungsgeräte, Motore oder Handstücke, eine Steuerung zum Betrieb der Behandlungsinstrumente, Stellelemente zur Auswahl oder Vorgabe von Betriebsparametern, Anzeigen für betriebsrelevante Daten, Ablagen für die Behandlungsinstrumente etc. auf.

Die Anschlussvorrichtung ist bevorzugt als Steckaufnahme ausgebildet, in die die Ventilvorrichtung einsteckbar oder einschiebbar ist. Die Anschlussvorrichtung weist des Weiteren besonders bevorzugt ein Schaltelement auf, zum Beispiel in Form eines Fortsatzes, Stiftes oder einer Platte, das zumindest einen der beiden Ventilkörper der Ventilvorrichtung, bevorzugt den Ventilkörper des Strömungswegs für die Flüssigkeit, durch direkten oder indirekten Kontakt von seiner Schließstellung in seine Öffnungsstellung bewegt, so dass durch das Anschließen des Flüssigkeitsbehälters an die Behandlungseinrichtung zumindest ein Strömungsweg automatisch geöffnet wird. Wird der Kontakt zwischen der Anschlussvorrichtung und dem Flüssigkeitsbehälter getrennt, so nimmt der zumindest eine Ventilkörper, der durch ein Federelement vorgespannt ist, automatisch wieder seine Schließstellung ein.

Gemäß einem Ausführungsbeispiel schließt an die Querbohrung ein entlang der Außenseite des Ventilgehäuses verlaufender Medienkanal an. Dieser ermöglicht in vorteilhafter Weise das Vorsehen eines Filters zum Filtern von Partikeln aus der Luft, so dass in der Luft enthaltene Partikel nicht in die Ventilvorrichtung oder den Flüssigkeitsbehälter eindringen.

Bevorzugt ist der zweite, im ersten Ventilkörper vorgesehene Strömungsweg mit der Querbohrung verbindbar oder verbunden und dient somit zur Förderung der Luft in den Flüssigkeitsbehälter. Durch die Anordnung im ersten Ventilkörper ist der Durchmesser des Strömungswegs für die Luft im Vergleich zum Durchmesser des Strömungswegs für die Flüssigkeit gering, so dass zum Verschluss ein kleiner, gewichtsmäßig leichter, zum Beispiel stiftförmiger, zweiter Ventilkörper ausreicht. Ein leichter Ventilkörper kann wiederum alleine durch den Unterdruck, der durch das Absaugen der Flüssigkeit aus dem Flüssigkeitsbehälter entsteht, aus seiner Schließstellung in seine Öffnungsstellung bewegt werden, so dass dafür in vorteilhafter Weise keine zusätzlichen Schalt- oder Steuerelement vorzusehen sind.

Zur Verbindung des zweiten Strömungswegs mit der Querbohrung ist im ersten Ventilkörper einen Verbindungsabschnitt vorgesehen, der im Bereich der Querbohrung an die Innenseite des Ventilgehäuses anschließt. Der Verbindungsabschnitt ist dabei vom zweiten Strömungsweg derart durchsetzt, dass der zweite Strömungsweg an die Querbohrung anschließt. Der im Verbindungsabschnitt verlaufende Abschnitt des zweiten Strömungswegs ist dabei bevorzugt gewinkelt zur Längsachse der Ventilvorrichtung oder radial zur Längsachse der Ventilvorrichtung oder radial von einem weiteren Abschnitt des zweiten Strömungswegs wegweisend angeordnet.

Gemäß einem Ausführungsbeispiel weist der Verbindungsabschnitt zumindest eine Bohrung oder einen Kanal auf, die Abschnitte des ersten Strömungswegs bilden. Dies ist vor allem dann von Vorteil, wenn der Verbindungsabschnitt als verdickter Teil des ersten Ventilkörpers, d.h. als Teil des ersten Ventilkörpers mit einem vergrößerten Querschnitt, ausgebildet ist, so dass der Strömungsquerschnitt des ersten Strömungswegs durch den Verbindungsabschnitt verringert oder vollständig verschlossen ist.

In vorteilhafter Weise kann der Verbindungsabschnitt auch als Träger zumindest eines Dichtelements zum Abdichten des zweiten Strömungswegs oder der Querbohrung gegenüber dem ersten Strömungsweg dienen. Das Dichtelement ist zum Beispiel als O-Ring ausgebildet, das in einer Ringnut des Verbindungsabschnitts aufgenommen ist.

Um das Vergießen von Flüssigkeit aus dem Flüssigkeitsbehälter zu vermeiden, ist im ersten Strömungsweg der Ventilvorrichtung ein Federelement zum Vorspannen des ersten Ventilkörpers vorgesehen, das den ersten Ventilkörper in seine Schließstellung zwingt, außer der Flüssigkeitsbehälter ist mit der Behandlungseinrichtung verbunden. Bevorzugt weist der Verbindungsabschnitt des ersten Ventilkörpers eine Anlagefläche für das Federelement auf, so dass im Sinne eines möglichst einfachen Aufbaus der Ventilvorrichtung keine zusätzliche Lagerstelle für das Federelement geschaffen werden muss.

Gemäß einem weiteren Ausführungsbeispiel weist der erste Ventilkörper ein Anschlussende auf, das an dem ersten, dem Flüssigkeitsbehälter zugewandten Ende des Ventilgehäuses aus dem Ventilgehäuse ragt, so dass ein am Anschlussende vorgesehener Schließkörper außerhalb des Ventilgehäuses und innerhalb des Flüssigkeitsbehälters angeordnet ist.

Die Erfindung wird nachfolgend anhand eines bevorzugten Ausführungsbeispiels und Bezug nehmend auf die beigefügten Zeichnungen erläutert:
Figur 1 zeigt eine Schnittdarstellung eines bevorzugten Ausführungsbeispiels eines Flüssigkeitsbehälters mit einer Ventilvorrichtung, die in einer Anschlussvorrichtung einer Behandlungseinrichtung aufgenommen ist.
Figur 2 zeigt das in Figur 1 mit 'A' gekennzeichnete Detail, insbesondere die Ventilvorrichtung, in vergrößerter Ansicht.

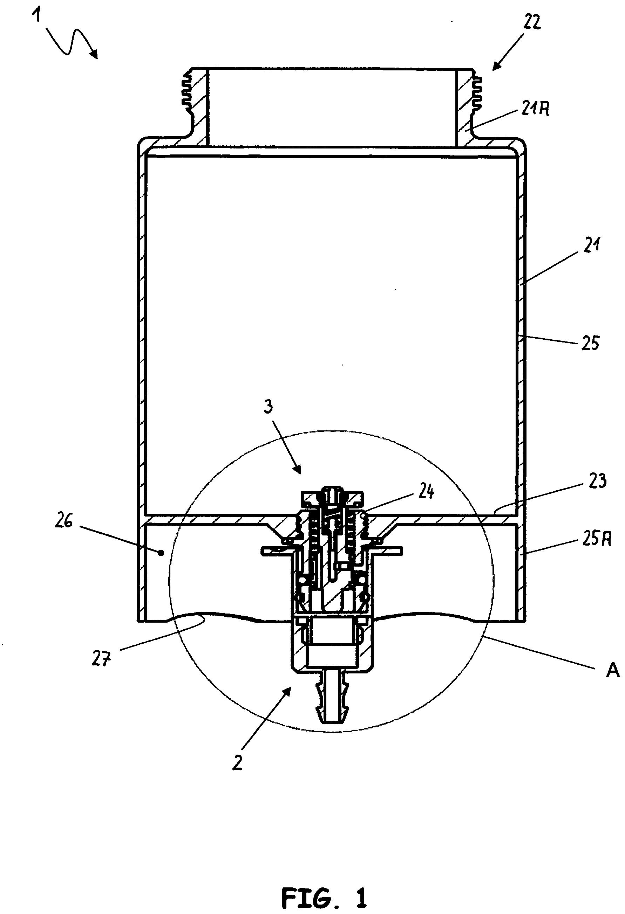

Der in Figur 1 dargestellte Flüssigkeitsbehälter 1 umfasst einen, bevorzugt zylindrisch geformten, Körper 21, der an einem Ende einen lösbaren Anschluss 22 für einen Deckel aufweist. Der Anschluss 22 umfasst zum Beispiel ein Gewinde, er kann jedoch selbstverständlich auch mit anderen form- oder kraftschlüssigen Anschlusselementen versehen sein. Der Anschluss 22 ist an einem verengten Halsabschnitt 21A des Behälterkörpers 21 angebracht. Am gegenüber liegenden Ende des Anschlusses 22 befindet sich der Behälterboden 23 mit einer Öffnung 24, in der eine Ventilvorrichtung 3 angeordnet ist. Durch die Ventilvorrichtung 3 kann Flüssigkeit aus dem Behälter 1 abgegeben werden und gleichzeitig Luft aus der Umgebung in den Behälter 1 eintreten, um den durch das Absaugen der Flüssigkeit entstehenden Unterdruck im Behälterinneren auszugleichen.

Die Behälterwand 25 erstreckt sich vom Hals 21 A über den Behälterboden 23 hinaus und bildet einen Behälterfuß 25A zum Abstellen des Behälters 1 und eine Ventilkammer 26, in die die Ventilvorrichtung 3 ragt und in der zumindest ein Teil der Anschlussvorrichtung 2 der Behandlungseinrichtung aufnehmbar ist. Um den Behälter 1 problemlos abstellen zu können, ist die Höhe des Behälterfußes 25A länger bemessen als die Länge des über den Behälterboden 23 ragenden Teils der Ventilvorrichtung 3. An der Unterseite des Behälterfußes 25A sind Luftdurchlässe 27 vorgesehen, zum Beispiel in Form von Schlitzen oder wellenförmigen Rücksprüngen, so dass, wie weiter unten noch im Detail beschrieben wird, Luft durch die Luftdurchlässe 27 und die Ventilvorrichtung 3 in das Behälterinnere fließen kann.

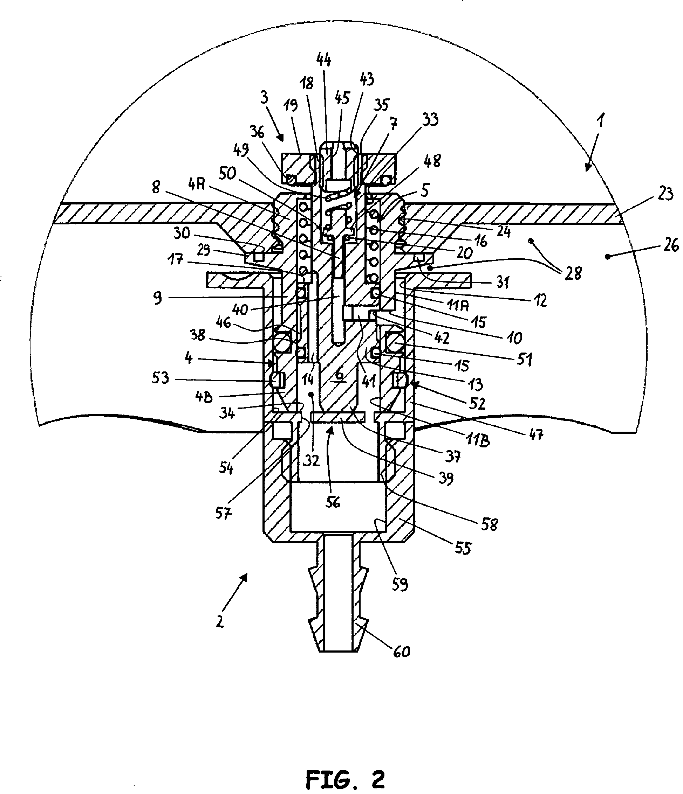

Der Behälterfuß 25A dient auch als Abstandhalter zwischen der Ventilvorrichtung 3 und / oder dem Flüssigkeitsbehälter 1 und der Behandlungseinrichtung. Seine Höhe ist dabei so bemessen, dass zwischen der Ventilvorrichtung 3 und / oder dem Flüssigkeitsbehälter 1 und der Behandlungseinrichtung zumindest ein schmaler Spalt 28 (siehe Figur 2) frei bleibt, durch den Luft in die Ventilvorrichtung 3 und in den Behälter 1 strömt. Der Behälterfuß 25A verhindert somit ein zu tiefes Eindringen der Ventilvorrichtung 3 in die Anschlussvorrichtung 2 und ein Aufliegen von Flächen oder Bauteilen der Anschlussvorrichtung 2 an der Ventilvorrichtung 3 und / oder am Flüssigkeitsbehälter 1.

Der in Figur 1 mit ,A' gekennzeichnete Ausschnitt ist in Figur 2 vergrößert dargestellt, wobei der Behälterboden 23, die Ventilvorrichtung 3 und die Anschlussvorrichtung 2 der Behandlungseinrichtung dargestellt sind. Die Behandlungseinrichtung umfasst ein Steuergerät, an dem die Anschlussvorrichtung 2 vorgesehen ist. Das Steuergerät weist unter anderem eine Pumpe auf, die über eine Leitung mit der Anschlussvorrichtung 2 verbunden ist, so dass die im Flüssigkeitsbehälter 1 enthaltene Flüssigkeit durch die Ventilvorrichtung 3, die Anschlussvorrichtung 2, den Schlauch und die Pumpe zu einer Behandlungsstelle gefördert werden kann.

Die Ventilvorrichtung 3 ist in der zentrisch im Behälterboden 23 angeordneten Öffnung 24 aufgenommen und über ein Gewinde darin befestigt. Anstelle des Gewindes sind selbstverständlich auch andere bekannte kraft- oder formschlüssige Verbindungen möglich. Die Ventilvorrichtung 3 durchdringt somit den Behälterboden 23, wobei sich jeweils ein Teil der Ventilvorrichtung 3 im Behälterinneren und außerhalb des Behälters 1, in der Ventilkammer 26, befindet.

Die Ventilvorrichtung 3 umfasst ein Ventilgehäuse 4 mit einem ersten, dem Flüssigkeitsbehälter 1 zugewandten Ende 4A und einem zweiten, vom Flüssigkeitsbehälter 1 abgewandten Ende 4B. Am ersten Ende 4A ist ein Außengewinde zum Verbinden der Ventilvorrichtung 3 mit einem Innengewinde in der Bohrung 24 des Behälterbodens 23 vorgesehen. An das Gewinde anschließend ist ein Ringflansch 29 vorgesehen, der als Anschlag ausgebildet ist, um die Einschraubtiefe der Ventilvorrichtung 3 in den Behälterboden 23 zu begrenzen, wenn er an einer Gegenanschlagfläche 30 des Behälterbodens 23 anliegt. Der Ringflansch 29 dient auch zur Aufnahme eines Dichtelements, zum Beispiel eines O-Rings in einer Ringnut 31, zur Abdichtung des Behälterinnenraums.

Zwischen den beiden Enden 4A, 4B erstreckt sich der Mantel 9 des Ventilgehäuses 4, der an seiner Außenseite bevorzugt zylindrisch geformt ist, jedoch auch andere, zum Beispiel eckige Formen, aufweisen kann. Das Ventilgehäuse 4 ist von einer zentrischen, zylindrischen Bohrung 32 durchsetzt, die an den beiden Enden 4A, 4B des Ventilgehäuses 4 jeweils in eine Öffnung 33, 34 mündet. In der Bohrung 32 ist ein erster Ventilkörper 6 beweglich, verschiebbar aufgenommen.

Der Ventilkörper 6 weist eine längliche, zylindrische, stiftförmige Gestalt auf und ragt mit einem Ende, das als Anschlussende 18 bezeichnet ist, durch die Öffnung 33 des Ventilgehäuses 4. An dem Anschlussende 18 ist ein Außengewinde vorgesehen, das zur Verbindung mit einem Schließkörper 19 dient. Der Schließkörper 19 ist als zylindrischer, scheibenförmiger Körper ausgebildet, der eine Innenbohrung 35 mit einem Innengewinde zur Verbindung mit dem Anschlussende 18 und eine Aufnahme für ein Dichtelement, zum Beispiel eines O-Rings in einer Ringnut 36, aufweist.

Zwischen dem Anschlussende 18 und dem gegenüber liegende Ende 37 weist der erste Ventilkörper 6 einen verbreiterten Abschnitt auf, der als Verbindungsabschnitt 13 bezeichnet wird. Der zylindrische Verbindungsabschnitt 13 ist in der Bohrung 32 des ersten Ventilkörpers 6 aufgenommen. Sein Durchmesser ist derart bemessen, dass zumindest Teile seiner Mantelfläche 38 die Innenseite 11 B des Ventilgehäuses 4 kontaktieren. Im Gegensatz dazu weist der übrige Teil des ersten Ventilkörpers 6 einen geringeren Durchmesser auf, so dass zwischen der Innenseite 11 B der Bohrung 32 und dem ersten Ventilkörper 6 ein Freiraum verbleibt. Der Verbindungsabschnitt 13 ist von mehreren Kanälen oder Bohrungen (nur eine Bohrung 14 ist in der Schnittdarstellung der Figur 2 erkennbar) durchsetzt, die sich vom Anschlussende 18 in Richtung des zweiten Endes 37 des ersten Ventilkörpers 6 erstrecken.

Zwischen dem ersten Ende 4A des Ventilgehäuses 4 und dem Verbindungsabschnitt 13 des ersten Ventilkörpers 6 ist ein Federelement 16, zum Beispiel eine Spiralfeder vorgesehen, die den ersten Ventilkörper 6 gegen das erste Ende 4A des Ventilgehäuses 4 vorspannt. Das Federelement 16 liegt an einer Anlagefläche 17, die Teil des Verbindungsabschnitts 13 ist, und an der Innenwandfläche des Ventilgehäuses 4, die die Öffnung 33 des Ventilgehäuses 4 umgibt, an.

Ein erster Strömungsweg 5, der für die Leitung der Flüssigkeit aus dem Behälter 1 vorgesehen ist, durchsetzt die Ventilvorrichtung 3. Der Strömungsweg 5 umfasst die Öffnung 33, die Bohrung 32, insbesondere den zwischen der Innenseite 11 B der Bohrung 32 und dem ersten Ventilkörper 6 verbleibenden Freiraum, die Kanäle oder Bohrungen 14 des Verbindungsabschnitts 13 und die Öffnung 34. Durch diesen ersten Strömungsweg 5 kann die im Flüssigkeitsbehälter 1 enthaltene Flüssigkeit in die Anschlussvorrichtung 2 der Behandlungseinrichtung fließen.

Ist der Flüssigkeitsbehälter 1 von der Anschlussvorrichtung 2 getrennt, so verschiebt das Federelement 16 den ersten Ventilkörper 6 in Richtung der Öffnung 34 des Ventilgehäuses 4 bis der Schließkörper 19 und insbesondere das Dichtelement in der Ringnut 36 an der Außenseite des Ventilgehäuses 4 anliegen und die Öffnung 33 verschließen. In dieser Stellung ist der erste Strömungsweg 5 der Ventilvorrichtung 3 geschlossen und es kann somit keine Flüssigkeit aus dem Flüssigkeitsbehälter 1 in die Ventilvorrichtung 3 und in den ersten Strömungsweg 5 eintreten.

Wird der Flüssigkeitsbehälter 1 an die Anschlussvorrichtung 2 angeschlossen, so ist an der Anschlussvorrichtung 2 ein Schaltelement 39 vorgesehen, zum Beispiel in Form eines Fortsatzes, Stiftes oder gemäß Figur 2 einer Platte, das den ersten Ventilkörper 6 entgegen der Federkraft des Federelements 16 von der Öffnung 34 weg bewegt. Damit wird auch der Schließkörper 19 und dessen Dichtelement vom Ventilgehäuse 4 weg verschoben, so dass zwischen dem Schließkörper 19 und dem Ventilgehäuse 4, insbesondere der Öffnung 33, ein Spalt frei wird, durch den die im Behälter 1 enthaltene Flüssigkeit in den ersten Strömungsweg 5 eintreten kann.

Im ersten Ventilkörper 6 ist eine Bohrung 40 vorgesehen, die sich von einer Öffnung 43 im Anschlussende 18 in Richtung des zweiten Endes 37 bis in den Verbindungsabschnitt 13 des ersten Ventilkörpers 6 erstreckt. Die Bohrung 40 verläuft somit parallel oder konzentrisch zur Bohrung 32 des Ventilgehäuses 4. Die Bohrung 40 umfasst zwei Abschnitte mit unterschiedlichen Durchmessern, wobei der Abschnitt mit dem größeren Durchmesser an die Öffnung 43 anschließt. In die Öffnung 43 und in den daran anschließenden Abschnitt mit dem größeren Durchmesser ist mittels eines Gewindes eine Gewindehülse 44 eingeschraubt. Die Gewindehülse 44 weist eine weitere Bohrung 45 auf, die mit der Bohrung 40 verbunden ist und die in den Innenraum des Flüssigkeitsbehälters 1 mündet. An die Gewindehülse 44 ist optional ein Steigrohr anschließbar.

Im Bereich des Verbindungsabschnitts 13 ist eine gewinkelt oder quer zur Bohrung 40 angeordnete und sich mit der Bohrung 40 vereinigende oder darin mündende Bohrung 41 vorgesehen. Die Bohrung 41 endet in der Mantelfläche 38 des Verbindungsabschnitts 13 in einer Öffnung 42.

Die Bohrung 45 der Gewindehülse 44 und die Bohrungen 40, 41 im ersten Ventilkörper 6 bilden gemeinsam einen zweiten Strömungsweg 7, der für die Leitung von Luft in den Flüssigkeitsbehälter 1 vorgesehen ist. Um die Verbindung des zweiten Strömungswegs 7 zu einer Gas- oder Luftquelle, insbesondere der Umgebungsluft, herzustellen, ist im Mantel 9 des Ventilgehäuses 4 eine, bevorzugt schlitzförmige, Querbohrung 10 vorgesehen, die mit dem zweiten Strömungsweg 7, insbesondere mit der Bohrung 41 verbindbar oder verbunden ist, so dass die Luft durch die Querbohrung 10 in die Bohrung 41 fließen kann.

Bevorzugt befindet sich am Mantel 38 des Verbindungsabschnitts 13 zusätzlich eine den Mantel 38 umlaufende Ringnut 46, in der die Öffnung 42 der Bohrung 41 angeordnet ist, so dass die Öffnung 42 und die Querbohrung 10 über die Ringnut 46 miteinander verbunden sind. Damit ist es nicht notwendig, dass die Querbohrung 10 und die Öffnung 42 einander direkt gegenüber stehen, damit Luft in den zweiten Strömungsweg 7 eintritt. Dies ist insbesondere aufgrund der Verschiebbarkeit des ersten Ventilkörpers 6 als auch aufgrund der Drehbarkeit um seine eigene Achse wichtig. Um einen zuverlässigen Luftübergang zu gewährleisten, ist der Durchmesser der Ringnut 46 (= die Höhe der Ringnut 46 zwischen den beiden Dichtelemente 15) deutlich größer als der Durchmesser der Öffnung 42. An beiden Seiten der Ringnut 46 sind Dichtelemente 15 zum Abdichten des die Öffnung 42, die Ringnut 46 und die Querbohrung 10 umfassenden Medienübergangs vorgesehen. Die Dichtelemente 15 bestehen zum Beispiel aus O-Ringen, die in weiteren Ringnuten im Mantel 38 des Verbindungsabschnitts 13 aufgenommen sind.

Die Querbohrung 10 kann derart am Ventilgehäuse 4 angeordnet sein, dass sie direkt mit der Umgebung, d.h. dem freien Luftraum, in Kontakt steht oder dass sie, wie in Figur 2 dargestellt, über einen Medienkanal 12 mit der Umgebung, zum Beispiel mit dem Spalt 28 zwischen dem Behälter 1 und der Anschlussvorrichtung 2, verbunden ist. Der Medienkanal 12 erstreckt sich entlang der Außenseite 11A des Ventilgehäuses 4 bzw. wird durch die Außenseite 11A des Ventilgehäuses 4 und die Innenseite der Anschlusshülse 47 der Anschlussvorrichtung 2 gebildet.

Im zweiten Strömungsweg 7, insbesondere in der Bohrung 40, ist ein zweiter Ventilkörper 8 aufgenommen, der eine kugelförmige oder ebenfalls eine längliche, stiftförmige, zylindrische Form aufweist. Der zweite Ventilkörper 8 weist einen ersten Abschnitt mit einem ersten, geringen Durchmesser auf, der im Abschnitt der Bohrung 40 mit dem geringeren Durchmesser angeordnet ist. Ein zweiter Abschnitt des zweiten Ventilkörpers mit einem zweiten, größeren Durchmesser ist im Abschnitt der Bohrung 40 mit dem größeren Durchmesser aufgenommen. Schließlich ist zwischen den beiden Abschnitten des zweiten Ventilkörpers 8 mit den unterschiedlichen Durchmessern ein Ringflansch 48 vorgesehen, an dem ein Dichtelement 20 anliegt, das den Abschnitt mit dem geringeren Durchmesser umgibt.

Auf der anderen Seite des Ringflansches 48 ist ein Federelement 49, zum Beispiel eine Spiralfeder, vorgesehen, die auf dem Ringflansch 48 und auf der Gewindehülse 44, bevorzugt in einem verbreiterten Abschnitt oder einer Schulter der Bohrung 45, aufliegt. Das Federelement 49 spannt den zweiten Ventilkörper 8 und insbesondere das Dichtelement 20 gegen die Schulter 50 am Übergang des Abschnitts der Bohrung 40 mit dem größeren Durchmesser zu dem Abschnitt mit dem geringeren Durchmesser vor. Damit ist der zweite Strömungsweg 7 verschlossen, so dass weder Luft von der Umgebung in den Behälter 1 noch Flüssigkeit aus dem Behälter 1 in die Umgebung strömen kann.

Wird Flüssigkeit aus dem Behälter 1 abgesaugt, so entsteht im Behälterinneren ein Unterdruck, der mit zunehmendem Absaugen von Flüssigkeit ansteigt, bis schließlich die Federkraft des Federelements 49 zu gering ist, um den zweiten Strömungsweg 7 weiterhin verschlossen zu halten. Kurzfristig wird somit der zweite Ventilkörper 8 gegen die Federkraft des Federelements 49 in Richtung der Gewindehülse 44 bewegt, wodurch der zweiten Strömungsweg 7 geöffnet wird und Luft aus der Umgebung durch den Medienkanal 12, die Querbohrung 10, die Ringnut 46, die Öffnung 42, die Bohrungen 41, 40 und 45 in den Flüssigkeitsbehälter 1 strömen kann. Der dadurch erfolgende Druckausgleich im Flüssigkeitsbehälter 1 ermöglicht es dem zweiten Ventilkörper 8 wieder seine Ausgangsposition einzunehmen, so dass der zweite Strömungsweg 7 wieder verschlossen ist.

An der Außenseite 11 A des Ventilgehäuses 4, anschließend an die Querbohrung 10 ist ein weiteres Dichtelement 51 vorgesehen, das zum Beispiel eine die Außenseite 11 A umgebende Ringnut und einen darin aufgenommenen O-Ring umfasst. Das Dichtelement 51 dient zum Abdichten des ersten Strömungswegs 5 und der Anschlussvorrichtung 2, insbesondere der Anschlusshülse 47, so dass keine Flüssigkeit zwischen der Ventilvorrichtung 3 und der Anschlussvorrichtung 2 austritt.

Anschließend an das Dichtelement 51 ist eine Verriegelungsvorrichtung 52 vorgesehen, die aus einer ersten, die Außenseite 11A des Mantels 9 des Ventilgehäuses 4 umgebende Ringnut, einer zweiten Ringnut, die in der Anschlussvorrichtung 2 angeordnet ist, insbesondere an einer der Ventilvorrichtung 3 zugewandten Innenfläche der Anschlusshülse 47, und einem Federring 53, der in einer der Ringnuten aufgenommen ist, besteht. Beim Einschieben der Ventilvorrichtung 3 in die Anschlussvorrichtung 2 rastet der Federring 53 in beide Nuten ein und verhindert so ein ungewolltes Lösen der beiden Bauteile.

Die Anschlussvorrichtung 2 der Behandlungseinrichtung umfasst eine oder mehrere Hülsen mit Innenbohrungen zur Aufnahme zumindest eines Teils der Ventilvorrichtung 3 und zur Weiterleitung der aus dem Flüssigkeitsbehälter 1 geförderten Flüssigkeit. Die Anschlussvorrichtung 2 gemäß Figur 2 besteht aus einer Anschlusshülse 47 und einer Tüllenhülse 55. Die Anschlusshülse 47 weist eine Innenbohrung 54 auf, die an einem Ende der Anschlusshülse 47 in einer Endplatte 56 mit mehreren Öffnungen 57 endet. Durch diese siebartige Endplatte 56 fließt die aus dem Flüssigkeitsbehälter 1 geförderte Flüssigkeit weiter in die Tüllenhülse 55. Die Endplatte 56 oder zumindest ein Teil der Endplatte 56 dient, wie weiter oben schon beschrieben, auch als Schaltelement 39 zum Verschieben des ersten Ventilkörpers 6 von seiner Schließstellung in seine Öffnungsstellung.

An die Endplatte 56 schließt ein Verbindungsteil 58 mit einem Außengewinde an, auf das die Tüllenhülse 55 mittels eines Innengewindes aufgeschraubt ist. Die Tüllenhülse 55 weist ebenfalls eine Innenbohrung 59 auf, die mit der Innenbohrung 54 der Anschlusshülse 47 über die Öffnungen 57 der Endplatte 56 verbunden ist. Eine Schlauchtülle 60 an einem Ende der Tüllenhülse 55 ermöglicht den Anschluss eines Flüssigkeitsschlauchs an die Anschlussvorrichtung 2 zur Weiterleitung der Flüssigkeit, zum Beispiel einer physiologischen Kochsalzlösung, zur Behandlungsstelle. Alternativ können die Tüllenhülse 55 und die Anschlusshülse 47 einteilig ausgebildet sein.

Die Erfindung ist nicht auf das das beschriebene Ausführungsbeispiel beschränkt, sondern umfasst alle Ausführungen, die das prinzipielle, sinngemäße Funktionsprinzip der Erfindung anwenden oder beinhalten.

## Patentansprüche

1. Flüssigkeitsbehälter (1) zur Abgabe von Behandlungsflüssigkeit an eine Behandlungsstelle über eine medizinische oder chirurgische, insbesondere dentalmedizinische oder dentalchirurgische, Behandlungseinrichtung, die eine Anschlussvorrichtung (2) für den Flüssigkeitsbehälter (1) aufweist, wobei der Flüssigkeitsbehälter (1) eine Ventilvorrichtung (3) zum Durchtritt von Flüssigkeit aus dem Flüssigkeitsbehälter (1) in die Behandlungseinrichtung und zum Durchtritt eines gasförmigen Mediums in den Flüssigkeitsbehälter (1) aufweist und die Ventilvorrichtung (3) umfasst:
- ein Ventilgehäuse (4) mit einem ersten, das Ventilgehäuse (4) durchsetzenden Strömungsweg (5),
- einen beweglich in dem ersten Strömungsweg (5) aufgenommenen ersten Ventilkörper (6),
- einen zweiten, im ersten Ventilkörper (6) vorgesehene Strömungsweg (7), und
- einen beweglich in dem zweiten Strömungsweg (7) aufgenommenen zweiten Ventilkörper (8),
**dadurch gekennzeichnet, dass**
das Ventilgehäuse (4) ein erstes, dem Flüssigkeitsbehälter (1) zugewandtes Ende (4A), ein zweites, vom Flüssigkeitsbehälter (1) abgewandtes Ende (4B) und einen sich zwischen den beiden Enden (4A, 4B) erstreckenden Mantel (9) aufweist, der von einer Querbohrung (10) durchsetzt Ist, die mit einm der beiden Strömungswege (5, 7) verbindbar oder verbunden ist.

2. Flüssigkeitsbehälter (1) nach Anspruch 1, **dadurch gekennzeichnet, dass** an die Querbohrung (10) ein entlang der Außenseite (11 A) des Ventilgehäuses (4) verlaufender Medienkanal (12) anschließt.

3. Flüssigkeitsbehälter (1) nach Anspruch 1 oder 2, **dadurch gekennzeichnet, dass** der zweite, Im ersten Ventilkörper (6) vorgesehene Strömungsweg (7) mit der Querbohrung (10) verbindbar oder verbunden ist.

4. Flüssigkeitsbehälter (1) nach Anspruch 3, **dadurch gekennzeichnet, dass** der erste Ventilkörper (6) einen Verbindungsabschnitt (13) aufweist, der im Bereich der Querbohrung (10) an die Innenseite (11B) des Ventilgehäuses (4) anschließt, wobei dieser Verbindungsabschnitt (13) vom zweiten Strömungsweg (7) derart durchsetzt ist, dass der zweite Strömungsweg (7) mit der Querbohrung (10) verbindbar oder verbunden ist.

5. Flüssigkeitsbehälter (1) nach Anspruch 4, **dadurch gekennzeichnet, dass** der Verbindungsabschnitt (13) zumindest eine Bohrung (14) oder einen Kanal aufweist, die Abschnitte des ersten Strömungswegs (5) bilden.

6. Flüssigkeitsbehälter (1) nach Anspruch 4 oder 5, **dadurch gekennzeichnet, dass** der Verbindungsabschnitt (13) zumindest ein Dichtelement (15) zum Abdichten des zweiten Strömungswegs (7) oder der Querbohrung (10) aufweist.

7. Flüssigkeitsbehälter (1) nach einem der Ansprüche 4 - 6, **dadurch gekennzeichnet, dass**
im ersten Strömungsweg (5) ein Federelement (16) zum Vorspannen des ersten Ventilkörpers (6) vorgesehen ist, wobei der Verbindungsabschnitt (13) eine Anlagefläche (17) für das Federelement (16) aufweist.

8. Flüssigkeitsbehälter (1) nach einem der vorhergehenden Ansprüche, **dadurch gekennzeichnet, dass**
der erste Ventilkörper (6) ein Anschlussende (18) aufweist, das an dem ersten, dem Flüssigkeitsbehälter (1) zugewandten Ende (4A) des Ventilgehäuses (4) aus dem Ventilgehäuse (4) ragt, so dass ein am Anschlussende (18) vorgesehener Schließkörper (19) außerhalb des Ventilgehäuses (4) angeordnet ist.

9. Flüssigkeitsbehälter (1) nach einem der vorhergehenden Ansprüche, **gekennzeichnet durch**
einen kugelförmigen oder einen stiftförmigen, ein Dichtelement (20) umfassenden zweiten Ventilkörper (8).

10. Medizinische oder chirurgische, insbesondere dentalmedizinische oder dentalchirurgische Behandlungseinrichtung, zum Beispiel Zahnsteinentfernungseinrichtung oder Einheit zum Setzten von Implantaten, mit einer Anschlussvorrichtung (2) für einen Flüssigkeitsbehälter (1) und einer mit der Anschlussvorrichtung (2) verbundenen Flüssigkeitsleitung zur Förderung der Flüssigkeit aus dem Flüssigkeitsbehälter (1) zur Behandlungsstelle, **gekennzeichnet durch** einen Flüssigkeitsbehälter (1) nach einem der vorhergehenden Ansprüche.

## Claims

1. A fluid container (1) for dispensing a treatment fluid to a treatment site through a medical or surgical, in particular dental-medical or dental-surgical, treatment device, which comprises a connecting device (2) for the fluid container (1), wherein the fluid container (1) comprises a valve device (3) for the passage of fluid out of the fluid container (1) into the treatment device and for passing a gaseous medium into the fluid container (1), and the valve device (3) comprises:
- a valve housing (4) with a first flow path (5) passing through the valve housing (4),
- a first valve body (6) accommodated movably in the first flow path (5),
- a second flow path (7) provided in the first valve body (6), and
- a second valve body (8) accommodated movably in the second flow path (7),
**characterized in that**
the valve housing (4) comprises a first end (4A) facing the fluid container (1), a second end (4B) facing away from the fluid container (1) and a jacket (9) extending between the two ends (4A, 4B), said jacket (9) being passed by a transverse bore (10) which is or can be connected to one of the two flow paths (5, 7).

2. The fluid container (1) according to Claim 1, **characterized in that** a media channel (12) running along the outside (11A) of the valve housing (4) connects to the transverse bore (10).

3. The fluid container (1) according to Claim 1 or 2, **characterized in that** the second flow path (7) which is provided in the first valve body (6) is or can be connected to the transverse bore (10).

4. The fluid container (1) according to Claim 3, **characterized in that** the first valve body (6) has a connecting section (13), which connects to the inside (11B) of the valve housing (4) in the area of the transverse bore (10), wherein this connecting section (13) is passed through by the second flow path (7), such that the second flow path (7) is or can be connected to the transverse bore (10).

5. The fluid container (1) according to Claim 4, **characterized in that** the connecting section (13) comprises at least one bore (14) or a channel forming the sections of the first flow path (5).

6. The fluid container (1) according to Claim 4 or 5, **characterized in that** the connecting section (13) comprises at least one sealing element (15) for sealing the second flow path (7) or the transverse bore (10).

7. The fluid container (1) according to any one of claims 4 - 6, **characterized in that** a spring element (16) is provided in the first flow path (5) for prestressing the first valve body (6), wherein the connecting section (13) comprises a supporting surface (17) for the spring element (16).

8. The fluid container (1) according to any one of the preceding claims, **characterized in that**
the first valve body (6) comprises a connecting end (18) which protrudes out of the valve housing (4) on the first end (4A) of the valve housing (4) facing the fluid container (1), so that a closing body (19) provided on the connecting end (18) is arranged outside of the valve housing (4).

9. The fluid container (1) according to any one of the preceding claims, **characterized by** a spherical or pin-shaped second valve body (8) comprising a sealing element (20).

10. A medical or surgical, in particular dental-medical or dental-surgical, treatment device, for example, a calculus-removing device or a unit for setting implants, having a connecting device (2) for a fluid container (1) and a fluid line connected to the connecting device (2) for conveying the fluid out of the fluid container (1) and to the treatment site, **characterized by**
a fluid container (1) according to any one of the preceding claims.

## Revendications

1. Récipient de liquide (1) pour la délivrance d'un liquide de traitement à un emplacement de traitement via un dispositif de traitement médical ou chirurgical, en particulier médico-dentaire ou de chirurgie dentaire, lequel présente un dispositif de raccordement (2) pour le récipient de liquide (1), dans lequel le récipient de liquide (1) comprend un dispositif de valve (3) pour le passage de liquide du récipient de liquide (1) dans le dispositif de traitement et pour le passage d'un milieu gazeux dans le récipient de liquide (1), et le dispositif de valve (3) comprenant:
- un boîtier de valve (4) avec un premier chemin d'écoulement (5) traversant le boîtier de valve (4),
- un premier corps de valve (6) réceptionné de manière mobile dans le premier chemin d'écoulement (5),
- un deuxième chemin d'écoulement (7) prévu dans le premier corps de valve (6), et
- un deuxième corps de valve (8) réceptionné de manière mobile dans le deuxième chemin d'écoulement (7),
**caractérisé en ce que**
le boîtier de valve (4) présente une première extrémité (4A) tournée vers le récipient de liquide (1), une deuxième extrémité (4B) tournant le dos au récipient de liquide (1) et une enveloppe (9) s'étendant entre les deux extrémités (4A, 4B), laquelle est traversée par un trou transversal (10) qui peut être relié, ou est relié à l'un des deux chemins d'écoulement (5, 7).

2. Récipient de liquide (1) selon la revendication 1, **caractérisé en ce qu'**un canal à fluide (12) s'étendant le long du côté extérieur (11A) du boîtier de valve (4) est en jonction avec le trou transversal (10).

3. Récipient de liquide (1) selon la revendication 1 ou 2, **caractérisé en ce que** le deuxième chemin d'écoulement (7) prévu dans le premier corps de valve (6) peut être relié, ou est relié au trou transversal (10).

4. Récipient de liquide (1) selon la revendication 3, **caractérisé en ce que** le premier corps de valve (6) présente une partie de liaison (13) laquelle, dans la zone du trou transversal (10), est en jonction avec le côté intérieur (11 B) du boîtier de valve (4), dans lequel cette partie de liaison (13) est traversée par le deuxième chemin d'écoulement (7) d'une façon telle, que le deuxième chemin d'écoulement (7) peut être relié, ou est relié au trou transversal (10).

5. Récipient de liquide (1) selon la revendication 4, **caractérisé en ce que** la partie de liaison (13) présente au moins un perçage (14) ou un canal qui forment des parties du premier chemin d'écoulement (5).

6. Récipient de liquide (1) selon la revendication 4 ou 5, **caractérisé en ce que**
la partie de liaison (13) présente au moins un élément d'étanchéité (15) pour l'étanchéification du deuxième chemin d'écoulement (7) ou du trou transversal (10).

7. Récipient de liquide (1) selon l'une des revendications 4-6, **caractérisé en ce que**
l'on prévoit, dans le premier chemin d'écoulement (5), un élément de ressort (16) pour la précontrainte du premier corps de valve (6), dans lequel la partie de liaison (13) présente une surface d'appui (17) pour l'élément de ressort (16).

8. Récipient de liquide (1) selon l'une des revendications précédentes, **caractérisé en ce que**
le premier corps de valve (6) présente une extrémité de raccordement (18) qui dépasse hors du boîtier de valve (4) à la première extrémité (4A) du boîtier de valve (4), tournée vers le récipient de liquide (1), de sorte qu'un corps de fermeture (19) prévu à une extrémité de raccordement (18) est disposé à l'extérieur de la boîte de valve (4).

9. Récipient de liquide (1) selon l'une des revendications précédentes, **caractérisé par** un deuxième corps de valve (8) en forme de bille ou en forme de tige comprenant un élément d'étanchéité (20).

10. Dispositif de traitement médical ou chirurgical, en particulier médico-dentaire ou de chirurgie dentaire, par exemple dispositif d'élimination de tartre ou unité pour la pose d'implants, avec un dispositif de raccordement (2) pour un récipient de liquide (1) et une conduite de liquide reliée au dispositif de raccordement (2) pour acheminer le liquide du récipient de liquide (1) vers l'emplacement de traitement, **caractérisé par** un récipient de liquide (1) selon l'une des revendications précédentes.
